# EUROPÄISCHE PATENTSCHRIFT

(11) **EP 3 955 508 B1**
(45) Veröffentlichungstag und Bekanntmachung des Hinweises auf die Patenterteilung: **31.12.2025**
(21) Anmeldenummer: 20191212.8
(22) Anmeldetag: 14.08.2020
(51) Int. Cl.: H04L 9/08, H04L 9/40

(54) **AUSTAUSCH QUANTENSICHERER SCHLÜSSEL ZWISCHEN LOKALEN NETZEN**
EXCHANGE OF QUANTUM SECURE KEYS BETWEEN LOCAL AREA NETWORKS
ÉCHANGE DE CLÉ À SÉCURITÉ QUANTIQUE ENTRE DES RÉSEAUX LOCAUX

(43) Veröffentlichungstag der Anmeldung: 16.02.2022
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Maucher Jenkins Patent- und Rechtsanwälte

(56) Entgegenhaltungen:
- EP-A1- 3 562 115
- CN-A- 108 270 557
- CAO YUAN ET AL: "Cost-efficient quantum key distribution (QKD) over WDM networks", JOURNAL OF OPTICAL COMMUNICATIONS AND NETWORKING, INSTITUTE OF ELECTRICAL AND ELECTRONICS ENGINEERS, US, vol. 11, no. 6, 1 June 2019 (2019-06-01), pages 285 - 298, XP011729309, ISSN: 1943-0620, [retrieved on 20190610], DOI: 10.1364/JOCN.11.000285
- ANONYMOUS: "Quantum Key Distribution (QKD) over Software-Defined Optical Networks | IntechOpen", 5 November 2018 (2018-11-05), XP055628780, Retrieved from the Internet <URL:https://www.intechopen.com/books/quantum-cryptography-in-advanced-networks/quantum-key-distribution-qkd-over-software-defined-optical-networks> [retrieved on 20191004]

## Beschreibung

Die Erfindung betrifft eine Lösung zum Austausch jeweils eines, von gegebenenfalls mehreren entsprechend dieser Lösung zwischen Netzwerkknoten zweier lokaler Netze, nämlich beispielsweise zweier verschiedener Metropolitan Area Networks (MAN), übertragenen quantensicheren Schlüssels. Sie bezieht sich auf die Möglichkeit, einen solchen quantensicheren Schlüssel als Nutzschlüssel zur späteren Verwendung für einen sicheren Datenaustausch auf einem der Layer des OSI-Schichten-Modells zwischen zwei unterschiedlichen lokalen Netzen angehörenden Netzwerkknoten auszutauschen, obwohl eine zwischen den entsprechenden lokalen Netzen bestehende Verbindung nicht zur Übertragung quantensicherer Schlüssel nach einem QKD-Verfahren, also nach einem Verfahren der Quantum Key Distribution, ausgebildet ist.

Gegenstände der Erfindung sind ein Verfahren und ein zur Durchführung des Verfahrens in spezieller Weise ausgebildeter, im Weiteren auch als Übergangsknoten bezeichneter Netzwerkknoten, welcher als Teil eines lokalen Netzes zur Verbindung der beiden lokalen Netze über die schon zuvor angesprochene, nicht QKD-fähige Verbindung mit einem ebensolchen Übergangsknoten eines anderen lokalen Netzes verbunden ist.

Quantencomputer werden nach Ansicht hierzu aussagefähiger Fachleute bereits innerhalb der nächsten Dekade dazu in der Lage sein, heute noch als sicher angesehene, verbreitet eingesetzte Verschlüsselungsverfahren, welche beispielsweise auf der Primfaktorenzerlegung (RSA oder Diffie-Hellman) oder auf Algorithmen auf der Basis elliptischer Kurven (Elliptic Curve Digital Signature Algorithm, ECDSA) basieren, zu brechen. Andererseits kommt der gesicherten Übertragung von Daten über Kommunikationsnetze, zum Beispiel im Zusammenhang mit dem Ausbau der 5G-Mobilfunknetze und deren Nutzung für die Car-to-Car-Kommunikation oder für die Übertragung von Daten zur Steuerung von Maschinen im Rahmen von Industrie 4.0 oder aber auch im Zusammenhang mit der zunehmenden Nutzung von Smart Home Technologien, eine immer noch ständig steigende Bedeutung zu. Diese Sicherheit wird durch Verschlüsselung der Daten, derzeit noch mittels der bereits angesprochenen Verschlüsselungsverfahren, gewährleistet.

Die fortschreitende Entwicklung von Quantencomputern erfordert die Entwicklung und den Einsatz neuer Verschlüsselungstechniken und Verfahren. Während die bisher gebräuchlichen Verfahren auf der Annahme beruhen, dass sie auch unter Einsatz einer größeren Zahl parallel arbeitender moderner, aber mittels herkömmlicher Technik, das heißt nicht unter Einsatz der Quantenmechanik realisierter Computer nicht zu brechen sind, gilt dies für unter Verwendung von Quantencomputern geführte Angriffe zukünftig nicht mehr. Es gilt daher, Verschlüsselungsverfahren zu finden, welche auch einem Angriff mit Quantencomputern widerstehen können. Eine Möglichkeit, diesem Erfordernis zu entsprechen, besteht darin, sich auch zum Zweck der Verschlüsselung quantenmechanischer Verfahren zu bedienen.

Entsprechende, zum vorgenannten Zweck entwickelte Verfahren, welche gleichzeitig die Erzeugung kryptographischer Schlüssel auf quantenmechanischer Basis und deren Verteilung ermöglichen, werden unter dem Begriff QKD-Verfahren, QKD = Quantum Key Distribution, zusammengefasst. Eines dieser Verfahren, welches bereits auch in der Praxis genutzt wird, ist das QKD-Verfahren nach dem BB84-Protokoll. Bei den QKD-Verfahren handelt es sich um symmetrische Verschlüsselungsverfahren, welche das bei herkömmlichen Verschlüsselungsverfahren bestehende Problem des geschützten Austauschs des zur symmetrischen Verschlüsselung genutzten Schlüssels durch den Einsatz quantenmechanischer Wirkprinzipien lösen. Quantensichere Schlüssel können zudem mittels quantenmechanische Effekte nutzender Zufallszahlengeneratoren erzeugt werden, wobei die von einem solchen Quantum Random Number Generator (QRNG), anders als manche andere, nach klassischen Verfahren arbeitende und ebenfalls als Zufallszahlengenerator bezeichnete Einrichtungen, tatsächlich zufällige Zahlen erzeugen.

Allerdings ist die Errichtung QKD-Verfahren nutzender Infrastrukturen sehr aufwendig und insbesondere kostenintensiv. Zudem ist dies - Stand jetzt - mit dem Nachteil verbunden, dass quantensichere Schlüssel (Quantenschlüssel) jedenfalls über leitungsbasierte Übertragungswege, wie insbesondere Glasfaserkabel, mittels der bekannten QKD-Verfahren nicht über Distanzen übertragen werden können, die 100 Kilometer deutlich übersteigen oder gar ein Vielfaches davon betragen.

Eine demgegenüber preiswertere Alternative bilden in jüngerer Zeit verstärkt fortentwickelte Verfahren der Post Quantum Cryptography (PQC). Es handelt sich hierbei um eine Gruppe von insoweit als klassisch anzusehender Kryptographie-Verfahren, als diese Verfahren nicht auf der Nutzung quantenmechanischer Effekte beruhen. Es handelt sich vielmehr um Verfahren, die auf komplexen mathematische Problemen beruhen, für die angenommen wird, dass sie auch rechentechnischen Fähigkeiten von Quantencomputern widerstehen können. Während die zumindest theoretisch bestehende absolute Sicherheit gegenüber Angriffsversuchen für QKD-Verfahren bewiesen ist, gilt dies für PQC-Verfahren nicht. Sie basieren lediglich auf der Annahme, dass sie auch mittels Quantencomputern nicht auszuhebeln sind, wobei aber einen Gegenbeweis tatsächlich bisher nicht erbracht werden konnte. Für besonders sensible Bereiche wird man aber dennoch, trotz der damit verbundenen Kosten, künftig auf den Einsatz von QKD-Verfahren setzen.

In den Netzinfrastrukturen der Telekommunikation existieren in den meisten Ländern unterschiedliche lokale Netze, wie zum Beispiel Metro-Netze, City-Netze oder Regio-Netze. So wurden etwa, insbesondere in Städten und in deren Umkreis oder in anderen Metropolregionen, so genannte Metro-Netze (MAN) errichtet. Bei Metro-Netzen handelt es sich um durch eine Mehrzahl von Netzwerkknoten gebildete Netzwerke, die von entsprechenden Netzbetreibern, in der Regel ohne direkte Teilnehmerzugänge, im Übergangsbereich zwischen Zugangsnetzen und Kernnetzen betrieben werden. Sie sind zur Bereitstellung einer hohen Bandbreite typischerweise als Glasfaser-Netzwerke ausgebildet, die beispielsweise verschiedene Stadtbezirke einer Stadt oder innerhalb einer Stadt unterschiedlich lokalisierte lokale Netzwerke von Organisationen, Banken oder sonstigen Unternehmen miteinander verbinden. Aber auch für andere lokale Netze kann es wünschenswert oder erforderlich sein, zwischen einzelnen dieser Netze, trotz des Fehlens einer QKD-Verbindung, zu unterschiedlichen Zwecken quantensichere Schlüssel auszutauschen, die dann in jeweils einem Netzwercknoten der sie austauschenden Netze als gemeinsame Schlüssel vorliegen. In Cao, Yuan et al. "Cost-Efficient Quantum Key Distribution (QKD) Over WDM Networks", Journal of Optical Communications and Networking. vol. 11, no. 6, pp. 285-298, June 2019, 10.1364/JOCN.11.000285 wird kosteneffiziente QKD über WDM-Netzwerke beschrieben.

Ungeachtet dessen liegt ein gewisser Fokus der hier vorgestellten Erfindung auf den Austausch von Quantenschlüsseln zwischen Metro-Netzen, so dass die Erfindung insbesondere auch unter Bezug auf diese spezielle Form lokaler Netze erläutert werden soll, jedoch ohne dass die vorgestellte Lösung hierauf beschränkt wäre. Vor dem Hintergrund der einleitenden Erläuterungen und der wichtigen Funktion von Metro-Netzen als Bindeglied zwischen Zugangsnetzen und Kernnetzen und unter Berücksichtigung der Tatsache, dass Metro-Netze typischerweise eine Ausdehnung aufweisen, welche 100 Kilometer nicht deutlich übersteigt, werden derartige Metro-Netze zumindest teilweise bereits unter Nutzung von QKD-Verfahren abgesichert. Die Netzwerkknoten innerhalb eines solchen Metro-Netzes stehen untereinander in QKD-Beziehungen, wodurch zwischen ihnen eine besonders sichere Datenübertragung gewährleistet ist. Allerdings besteht auch über die lokalen Grenzen von Metro-Netzen hinaus ein zunehmender Bedarf an einer sicheren Datenübertragung.

Letzteres gilt zum Beispiel auch für Verbindungen zwischen einzelnen Metro-Netzen, also zwischen Metropolregionen, die häufig mehrere Hundert Kilometer oder - insbesondere global gar mehrere Tausend Kilometer auseinanderliegen. Der Einsatz QKD-basierter Verschlüsselungsverfahren käme in derartigen Fällen allenfalls über satellitenbasierte Übertragungswege in Betracht. Zwar wurden auch hierfür bereits Techniken entwickelt, jedoch sind diese noch kostenintensiver als mittels Glasfasertechnik genutzte QKD-Infrastrukturen, wobei zudem ihre umfangreiche Nutzung durch die Übertragungskapazitäten dafür benötigter Satelliten limitiert ist. Vor dem Hintergrund der vorstehenden Erläuterungen kann es sich bei zwei lokalen Netzen, zwischen denen Quantenschlüssel als Nutzschlüssel gemäß der Erfindung ausgetauscht werden, - bei entsprechendem Ausbau dieser Netze (Bestehen von QKD-Beziehungen zwischen zumindest einigen Netzwerkknoten eines solchen lokalen Netzes) - grundsätzlich auch um Landesnetze oder gar um kontinentale Netze handeln, die bezogen auf ein jeweiliges Land/einen jeweiligen Kontinent jeweils als lokal anzusehen sind.

Aufgabe der Erfindung ist es, eine Lösung anzugeben, welche einen Austausch quantensicherer Schlüssel zwischen in verschiedenen lokalen Netzen angeordneten Netzwerkknoten über eine die betreffenden lokalen Netze miteinander verbindende, nicht zur Nutzung von QKD-Verfahren ausgebildete Verbindung ermöglicht. Hierzu sind ein Verfahren anzugeben und ein zur Durchführung des Verfahrens geeigneter, an den Endpunkten einer Verbindung der lokalen Netze als Übergangsknoten anzuordnender Netzwerkknoten bereitzustellen.

Die Aufgabe wird durch ein Verfahren mit den Merkmalen des Patentanspruchs 1 gelöst. Ein die Aufgabe lösender Netzwerkknoten, das heißt ein entsprechender Übergangsknoten, wird durch den ersten Sachanspruch charakterisiert. Vorteilhafte Aus- und Weiterbildungen der Erfindung sind durch die jeweiligen Unteransprüche gegeben.

Gemäß der Aufgabe bezieht sich das vorgeschlagene Verfahren auf ein Verfahren zum Austausch eines quantensicheren Schlüssels zwischen Netzwerkknoten zweier lokaler Netze, wie insbesondere zweier Metropolitan Area Networks (MAN). Hierbei geht es um den Austausch eines quantensicheren Schlüssels, welcher nachfolgend als Nutzschlüssel für einen sicheren Datenaustausch auf einem der Layer des OSI-Schichtenmodells zwischen den in den beiden verschiedenen lokalen Netzen angeordneten Netzwerkknoten verwendet wird und von einem dieser dafür ausgebildeten Netzwerkknoten, nämlich von einem Netzwercknoten eines der beiden lokalen Netze, generiert und an den Netzwerkknoten des anderen lokalen Netzes übertragen wird. Dabei erfolgt die Übertragung des quantensicheren Nutzschlüssels zwischen den lokalen Netzen über eine zwischen Übergangsknoten beider lokaler Netze bestehende, nicht zur Übertragung quantensicherer Schlüssel nach einem QKD-Verfahren ausgebildete Verbindung.

Um den (einen von typischerweise mehreren in derselben Weise zu übertragenden) Nutzschlüssel dennoch sicher zwischen den lokalen Netzen übertragen zu können, wird vorgeschlagen, dass der Nutzschlüssel von den Übergangsknoten über die zwischen ihnen bestehende Verbindung symmetrisch verschlüsselt übertragen wird, nämlich durch eine bitweise XOR-Verknüpfung mit einem Quantenschlüssel, der in beiden lokalen Netzen als gemeinsamer Quantenschlüssel in einem jeweiligen lokalen Schlüsselspeicher der Übergangsknoten vorliegt. Der betreffende, jeweils verwendete gemeinsame Quantenschlüssel wird dabei durch ein Schlüsselmanagement aus einem typischerweise eine Vielzahl solcher gemeinsamen Schlüssel enthaltenden Vorrat entnommen.

Damit die Übergangsknoten beider lokalen Netze im Rahmen eines Übertragungsvorganges jeweils denselben gemeinsamen Schlüssel verwenden, werden die Schlüssel durch das Schlüsselmanagement mit einem ihnen jeweils eindeutig zugeordneten Index (Identifier) verwaltet, wobei zwischen den die Verschlüsselung in den Übergangsknoten vornehmenden Einheiten im Zusammenwirken mit dem Schlüsselmanagement eine Information mit dem Index des jeweils verwendeten Schlüssels ausgetauscht wird. Dasselbe geschieht im Zusammenhang mit der verschlüsselten Übertragung des Nutzschlüssels (Übertragung in Form einer durch bitweise XOR-Verknüpfung erzeugten Bitsequenz) zwischen den QKD-Einheiten (QKD-Servern) der Netzwerkknoten eines lokalen Netzes. Diese für den Fachmann selbstverständliche Verwendung von Schlüsselindizes wird im Zusammenhang mit allen hier erfolgenden Erläuterungen zur Erfindung vorausgesetzt und soll daher auch in den nachfolgenden Ausführungen nicht weiter thematisiert werden.

Aus diesen lokalen Schlüsselspeichern, in welchen ein gemeinsamer Schlüsselvorrat der beiden Übergangsknoten abgelegt ist, welcher mindestens den einen vorgenannten gemeinsamen Quantenschlüssel, vorzugsweise mehrere gemeinsame Quantenschlüssel enthält, wird der zur symmetrischen Verschlüsselung des Nutzschlüssels verwendete Quantenschlüssel, gesteuert durch das bereits angesprochene, ebenfalls lokal in beiden Übergangsknoten ausgebildete Schlüsselmanagement, entnommen. Vor der Übertragung des Nutzschlüssels lokal in den Übergangsknoten, das heißt in ihren lokalen Schlüsselspeichern abgelegte gemeinsame Quantenschlüssel werden in einem der Übergangsknoten vorzugsweise mittels eines Quantum Random Number Generator (QRNG) generiert und verschlüsselt an den anderen Übergangsknoten übertragen, wobei die Verschlüsselung mittels eines vorzugsweise mittels desselben QRNG generierten Quantenschlüssels erfolgt, der erfindungsgemäß zuvor zwischen den Übergangsknoten unter Anwendung eines PQC-Verschlüsselungsverfahrens, das heißt eines PQC-Verfahrens, also eines Verfahrens der Post Quantum Cryptography, ausgetauscht wird.

Mittels des zur Lösung der Aufgabe vorgeschlagenen Verfahrens wird also erreicht, dass die beiden hier als Übergangsknoten bezeichneten, in jeweils einem der beiden lokalen Netze (zum Beispiel Metro-Netze) angeordneten Netzwercknoten über einen gemeinsamen Vorrat an Quantenschlüsseln verfügen, als seien sie untereinander über eine den Einsatz eines QKD-Verfahrens ermöglichende Verbindung mit einem Quantenkanal verbunden. Bewerkstelligt wird dies dadurch, dass die dem gemeinsamen Schlüsselvorrat zugeordneten Quantenschlüssel, wie ausgeführt, bei der Übertragung selbst mittels eines Quantenschlüssels gesichert werden, wobei der letztgenannte, der sicheren Übertragung von Quantenschlüsseln des gemeinsamen Schlüsselvorrats dienende Quantenschlüssel seinerseits ebenfalls unter Gewährleistung hoher Sicherheit, nämlich durch Nutzung eines unterstelltermaßen auch Angriffen mit Quantencomputern widerstehenden PQC-Verschlüsselungsverfahrens, zwischen den Übergangsknoten ausgetauscht wird. Die Anwendung des entsprechenden PQC-Verfahrens und die Vorgänge der bitweisen XOR-Verknüpfung erfolgen dabei innerhalb der Netzwerkknoten in speziellen hardwaretechnisch gehärteten, das heißt als Hardware Secured Module (HSM) ausgebildeten Einheiten.

Bei den Übergangsknoten handelt es sich um Netzwerkknoten jeweils eines der der lokalen Netze, welche jedenfalls zur Erzeugung kryptographischer Schlüssel unter Nutzung quantenmechanischer Mittel (QKD oder Quantum Random Number Generator - QRNG) ausgebildet sind, darüber hinaus aber in spezieller Weise für die Nutzung des vorgeschlagenen Verfahrens ausgebildet, nämlich mit Mitteln beziehungsweise Einrichtungen für den Einsatz der Post Quantum Cryptography, ausgestattet sind. Ungeachtet dessen schließt jedoch das Verfahren die Möglichkeit mit ein, dass der Nutzschlüssel für eine spätere Nutzung durch die Übergangsknoten selbst zwischen den Übergangsknoten und damit zwischen den lokalen Netzen ausgetauscht wird.

Insoweit handelt es sich bei den Übergangsknoten um Netzwerkknoten der jeweils zwei betrachteten lokalen Netze, welche aufgrund ihrer Anordnung an den Enden einer Verbindung dieser lokalen Netze und aufgrund ihrer Ergänzung durch Mittel zur Nutzung der PQC zur Unterscheidung von den anderen Netzwerkknoten eines jeweiligen lokalen Netzes im Rahmen der Darstellungen zur Erläuterung der Erfindung und in den Patentansprüchen als Übergangsknoten bezeichnet werden. Vorzugsweise ist das Verfahren zudem für einen Austausch von quantensicheren Schlüsseln zwischen (in diesem Zusammenhang nicht als Übergangsknoten fungierenden) Netzwerkknoten zweier lokaler Netze vorgesehen, welche den Nutzschlüssel über die Übergangsknoten und die zwischen den Übergangsknoten, das heißt zwischen den lokalen Netzen bestehende Verbindung hinweg, miteinander austauschen. Nähere Ausführungen dazu sollen später noch erfolgen.

An dieser Stelle sollen einige bereits zuvor und nachfolgend sowie in den Patentansprüchen verwendete Begrifflichkeiten hinsichtlich ihres bei der Beschreibung der Erfindung und der Beanspruchung ihrer Merkmale zugrunde gelegten Verständnisses erläutert werden.

Demnach wird unter einem Quantenkanal ein Übertragungskanal zur Übertragung von quantenmechanischen Zuständen, beispielsweise nach einem QKD-Verfahren, verstanden. Demgegenüber handelt es sich bei klassischen Kanälen um Übertragungskanäle, welche nicht als Quantenkanäle ausgebildet und daher nicht zur Übertragung von Quantenzuständen geeignet sind, sondern der Übertragung digitaler Signale über Funk oder über eine leitungsbasierte elektrische oder optische Verbindung dienen. Bei Daten kann es sich entsprechend dem hier zugrunde gelegten Verständnis um Nutzdaten, wie mediale Daten, Daten eines sonstigen Contents oder Programmdaten, aber letztlich auch um Schlüssel (Schlüsseldaten) oder aber auch um Management- oder Protokoll-Daten handeln, wie sie insbesondere auch für die QKD-Systeme benötigt werden.

Soweit es sich bei einem Quantenkanal um einen Quantenkanal zur Übertragung von Schlüsseln unter Nutzung eines QKD-Verfahrens handelt, ist einem solchen Kanal ein klassischer Kanal zugeordnet, welcher im Vergleich zu den vorgenannten klassischen Kanälen in spezieller Weise zur Übertragung von Daten, wie insbesondere von Steuer- und Managementdaten, ausgebildet ist, welche im Zusammenhang mit der gemeinsamen Schlüsselerzeugung, das heißt im Zusammenhang mit der gleichzeitig mit der Erzeugung einhergehenden Verteilung der Schlüssel, zwischen den über den zugehörigen Quantenkanal verbundenen Netzwerkknoten ausgetauscht werden. Diese speziellen, aber hinsichtlich des Übertragungsmediums und der übertragenen physikalischen Zustände /bei denen es sich nicht um quantenmechanische Zustände handelt) klassischen Kanäle müssen insbesondere über eine hohe Bandbreite verfügen und durch quantensichere Verschlüsselung gesichert sein.

Die Verwendung des Begriffs Nutzschlüssel für den entsprechend dem erfindungsgemäßen Verfahren über zwischen einem Netzwerkknoten eines ersten lokalen Netzes und dem Netzwerkknoten eines anderen (zweiten) lokalen Netzes zu übertragenden quantensicheren Schlüssel dient dazu, diesen Schlüssel sprachlich von anderen Schlüsseln zu unterscheiden, die bei dem Verfahren und seinen möglichen Ausgestaltungsformen in Zusammenhang mit der Übertragung dieses Nutzschlüssels zum Einsatz gelangen. Im Hinblick auf die von dem Nutzschlüssel zu unterscheidenden Schlüssel seien beispielsweise Schlüssel, nämlich ebenfalls quantensichere Schlüssel, nochmals angesprochen, welche beispielsweise bei der bitweisen XOR-Verknüpfung mit dem Nutzschlüssel zum Zweck seiner Übertragung innerhalb eines jeweiligen lokalen Netzes oder gegebenenfalls auch bei der Anwendung des PQC-Verfahrens, im Zusammenhang mit dem eigentlichen Verschlüsselungsvorgang, bei der verschlüsselten Datenübertragung über die zwischen zwei lokalen Netzen bestehende Verbindung verwendet werden. Insoweit sei angemerkt, dass es für eine einen Schlüssel darstellende oder einen solchen Schlüssel aufnehmende Bitsequenz als solches im Grunde nicht feststellbar ist, nach welchem Prinzip der betreffende Schlüssel gebildet wurde (zum Beispiel QKD, QRNG oder PQC) oder zu welchem Zweck er später verwendet werden soll oder ob die Bitsequenz durch eine Verknüpfung, insbesondere eine bitweise XOR-Verknüpfung von Schlüsseln entstanden ist.

Zusammenfassend sei daher nochmals betont, dass es sich bei dem unter Nutzung des Verfahrens zwischen zwei Netzwerkknoten verschiedener lokaler Netze zu übertragenden Nutzschlüssel jedenfalls um einen quantensicheren Schlüssel handelt, das heißt um einen für die spätere gesicherte Übertragung beliebiger Nutzdaten zwischen den diesen Nutzschlüssel austauschenden Netzwerkknoten vorgesehenen quantensicheren Schlüssel. Bei den zu seiner Übertragung insbesondere im Zusammenhang mit der Bildung von bitweisen XOR-Verknüpfungen verwendeten Schlüsseln kann es sich hingegen um Quantenschlüssel oder um PQC-Schlüssel, das heißt um nach einem Verfahren der Post Quantum Cryptography ausgehandelte Schlüssel handeln. Letztere können aber ebenfalls unter Nutzung quantenmechanischer Mittel, wie insbesondere eines Quantum Random Number Generators (QRNG) erzeugt sein, gelten aber jedenfalls unabhängig von der Art ihrer Erzeugung im Zusammenspiel mit dem sie bei der Verschlüsselung nutzenden PQC-Verfahren insoweit als quantensicher, als angenommen wird, dass die PQC-Verschlüsselung auch Angriffen von Quantencomputern widersteht.

Zu diesen Erläuterungen der verwendeten Begrifflichkeiten sei ergänzend noch angemerkt, dass der Begriff Quantenschlüssel insoweit synonym für einen quantensicheren Schlüssel gebraucht wird, als ein Quantenschlüssel selbstverständlich immer auch ein quantensicherer Schlüssel ist.

Abschließend sei betont, dass es sich bei den im Kontext der Darstellungen zur Erfindung angesprochenen XOR-Verknüpfungen stets um bitweise XOR-Verknüpfungen handelt, und zwar auch, wenn dies einmal nicht ausdrücklich angegeben sein sollte.

Entsprechend einer möglichen Ausgestaltung des Verfahrens wird der mit Hilfe eines PQC-Verfahrens zwischen den Übergangsknoten ausgetauschte Quantenschlüssel, welcher zur verschlüsselten Übertragung des mindestens einen, in einem lokalen Speicher jedes der beiden Übergangsknoten zur Bildung eines gemeinsamen Schlüsselvorrats (für die verschlüsselte Übertragung mindestens eines Nutzschlüssels) abgelegten Quantenschlüssels verwendet wird, mittels eines Public Key Verfahrens, nach dem Prinzip der Key Encapsulation, zwischen den Übergangsknoten übertragen. Dies hat den Vorteil, dass es für diesen Übertragungsvorgang nicht erforderlich ist, für beide Übergangsknoten einen gemeinsam, für eine symmetrische Verschlüsselung genutzten Schlüssel unter Erbringung des hierzu erforderlichen Sicherheitsaufwands bereitzustellen.

Wie zuvor ausgeführt wurde, umfasst der in den beiden Übergangsknoten vorhandene gemeinsame Schlüsselvorrat mindestens einen zur verschlüsselten Übertragung eines Nutzschlüssels verwendbaren Quantenschlüssel. Vorzugsweise ist jedoch das Verfahren so gestaltet, dass dieser Schlüsselvorrat tatsächlich mehrere, zur Verschlüsselung sicher zu übertragender quantensicherer Nutzschlüssel verwendbare Quantenschlüssel umfasst. Um diese den gemeinsamen Schlüsselvorrat zwischen den Übergangsknoten bildenden Quantenschlüssel nicht einzeln unter entsprechender Absicherung übertragen zu müssen, ist es vorgesehen, dass mit Hilfe des nach dem PQC-Verfahren zwischen den Übergangsknoten ausgetauschten Quantenschlüssels mehrere, von den Übergangsknoten als gemeinsame Schlüssel zu nutzende Quantenschlüssel gleichzeitig übertragen werden.

Dies geschieht, indem diese Mehrzahl als gemeinsame Schlüssel zur Übertragung von quantensicheren Nutzschlüsseln dienender Quantenschlüssel mittels einer Blockchiffre von dem diese Quantenschlüssel generierenden und sie zunächst in seinem eigenen lokalen Schlüsselspeicher ablegenden Übergangsknoten an den anderen Übergangsknoten übertragen werden, wo sie dann in dessen, den Vorrat gemeinsamer Quantenschlüssel aufnehmenden lokalen Speicher abgelegt werden. Gemäß einer praxisrelevanten Umsetzung einer solchen Ausgestaltungsform des erfindungsgemäßen Verfahrens wird hierbei das sich einer Blockchiffre bedienende AES-Verfahren (AES = Advanced Encryption Standard) angewendet.

Grundsätzlich wäre es denkbar, dass die unter Anwendung eines PQC-Verfahrens erfolgende verschlüsselte Übertragung von Daten zwischen den dafür in den Übergangsknoten vorgesehenen Mitteln unter der Annahme erfolgt, dass die betreffenden Mittel beider Seiten, das heißt beider Übergangsknoten, einander vertrauen können. In der Praxis ist es jedoch typischerweise so, dass sich entsprechende, unter Anwendung eines PQC-Verfahrens miteinander kommunizierende Einheiten zur Schaffung eines solchen Vertrauens gegenseitig authentifizieren. Im Grunde ist dies für ein sicheres Protokoll auch unabdingbar. Um etwa eine Man of the Middle Attacke auszuschließen, bei der einer empfangenden Einheit ein falscher Schlüssel oder sonstige falsche Daten untergeschoben werden.

Unabhängig von den zuvor erläuterten Varianten und Ausgestaltungsformen des erfindungsgemäßen Verfahrens ist dieses daher vorzugsweise so ausgestaltet, dass die in den Übergangsknoten vorgesehenen Mittel beziehungsweise Einrichtungen für die PQC-Verschlüsselung sich vor der Übertragung eines PQC-verschlüsselten Quantenschlüssels gegenseitig authentifizieren. Die Authentifikation erfolgt hierbei vorzugsweise unter Nutzung des SSL-Prinzips, also des Prinzips der Secure Sockets Layer, sowie nach einem PQC-Authentifizierungsverfahren, das heißt also gewissermaßen auf hybridem Wege. Eine alternative Möglichkeit der Authentifizierung besteht darin, dass die sich gegenseitig authentifizierenden Einheiten nach dem Public Key Prinzip eine ihnen bekannte, mittels privater Schlüssel nach einem PQC-Signaturverfahren signierte Nachricht austauschen. Das Verfahren kann entsprechend dieser Ausbildung so gestaltet sein, dass sich die die PQC-Verschlüsselung vornehmenden Mittel (PQC-Server) jeweils nur von Zeit zu Zeit, etwa jeweils nach dem Austausch einer festgelegten PQC-verschlüsselten Datenmenge, das heißt insbesondere nach der PQC-verschlüsselten Übertragung einer bestimmten Anzahl von Quantenschlüsseln erneut gegenseitig authentifizieren.

Bei einer Anwendung des Verfahrens zur Übertragung eines Nutzschlüssels zwischen Netzwerkknoten zweier lokaler Netze, bei denen es sich nicht um die Übergangsknoten selbst handelt, gestaltet sich der Ablauf des eigentlichen Austausches des Nutzschlüssels wie nachfolgend dargestellt.
I. Der den quantensicheren Nutzschlüssel generierende und in einem lokalen Schlüsselspeicher ablegende Netzwerknoten eines der beiden lokalen Netze (erstes lokales Netz) bildet eine bitweise XOR-Verknüpfung des generierten Nutzschlüssels mit einem, aufgrund Austausches nach einem QKD-Verfahren, bei diesem Netzwerkknoten selbst und bei dem Übergangsknoten des ersten, das heißt desselben lokalen Netzes als gemeinsamer Schlüssel vorliegenden Quantenschlüssel. Die durch diese bitweise XOR-Verknüpfung entstehende Bitsequenz überträgt der den Nutzschlüssel generierende Netzwerkknoten an den Übergangsknoten seines, das heißt des ersten lokalen Netzes über eine Punkt-zu-Punkt-Verbindung.
II. Der die gemäß I. durch bitweise XOR-Verknüpfung des Nutzschlüssels gebildete Bitsequenz empfangende Übergangsknoten des ersten lokalen Netzes bildet aus der von ihm empfangenen Bitsequenz eine neue Bitsequenz, welche er an den Übergangsknoten des zweiten lokalen Netzes über die nicht zur Nutzung eines QKD-Verfahrens geeignete Verbindung an den Übergangsknoten des anderen (zweiten) lokalen Netzes überträgt. Diese an den Übergangsknoten des anderen lokalen Netzes übertragene neue Bitsequenz bildet der Übergangsknoten des ersten lokalen Netzes, indem er die von ihm empfangene Bitsequenz abermals mit dem, von dem den Nutzschlüssel generierenden Netzwerkknoten zur Bildung der empfangenen Bitsequenz verwendeten gemeinsamen Quantenschlüssel sowie außerdem mit einem Quantenschlüssel bitweise XOR-verknüpft, den er aus dem mit dem Übergangsknoten des anderen, zweiten lokalen Netzes gemeinsamen Schlüsselvorrat entnimmt.
III. Der die von dem Übergangsknoten des ersten lokalen Netzes ausgesendete Bitsequenz empfangende Übergangsknoten des zweiten lokalen Netzes bildet aus der empfangenen Bitsequenz durch bitweise XOR-Verknüpfung wiederum eine neue Bitsequenz und überträgt diese, den Nutzschlüssel enthaltende neue Bitsequenz an den letztlich für den Empfang des Nutzschlüssels bestimmten Netzwerkknoten in demselben, das heißt in dem zweiten lokalen Netz. Bei dem letztgenannten, für den Empfang des Nutzschlüssels bestimmten Netzwercknoten handelt es sich gemäß der an dieser Stelle betrachteten Verfahrensgestaltung zumindest im Kontext dieses Übertragungsvorgangs nicht um einen Übergangsknoten. Die an den für den Empfang des Nutzschlüssels bestimmten Netzwerkknoten übertragene Bitsequenz, wird in dem Übergangsknoten des zweiten lokalen Netzes gebildet, indem dieser Übergangsknoten die von ihm aus dem ersten lokalen Netz empfangene Bitsequenz abermals mit dem gemäß II. aus dem gemeinsamen Schlüsselvorrat der Übergangsknoten (beider lokalen Netze) verwendeten Quantenschlüssel sowie mit einem, aufgrund Austausches nach einem QKD-Verfahren, bei diesem Übergangsknoten des zweiten lokalen Netzes und bei dem für den Empfang des Nutzschlüssels bestimmten Netzwercknoten als gemeinsamer Schlüssel vorliegenden Quantenschlüssel bitweise XOR-verknüpft. Die dabei entstehende Bitsequenz überträgt der Übergangsknoten an den für den Empfang des Nutzschlüssels bestimmten Netzwerkknoten über eine Punkt-zu-Punkt-Verbindung.
IV. Der für den Empfang des Nutzschlüssels bestimmte Netzwerkknoten extrahiert schließlich den Nutzschlüssel aus der von seinem Übergangsknoten (von dem Übergangsknoten desselben, das heißt des zweiten lokalen Netzes) empfangenen Bitsequenz und legt den Nutzschlüssel in einem lokalen Schlüsselspeicher ab. Zur Extraktion des Nutzschlüssels bildet der für dessen Empfang bestimmte Netzwerkknoten eine bitweise XOR-Verknüpfung aus der durch ihn vom Übergangsknoten empfangenen Bitsequenz, indem er diese Bitsequenz abermals mit dem gemäß III. vom Übergangsknoten verwendeten, aufgrund Austausches nach einem QKD-Verfahren, sowohl bei ihm selbst als auch bei dem Übergangsknoten desselben lokalen (zweiten) Netzes als gemeinsamer Schlüssel vorliegenden Quantenschlüssel bitweise XOR-verknüpft.

Auch hierbei erfolgen alle in den einzelnen beteiligten Netzwerkknoten ausgeführten bitweisen XOR-Verknüpfungen jeweils innerhalb hardwaretechnisch gehärteter Einheiten (HSM).

Ein die Aufgabe lösender, zur Durchführung des Verfahrens geeigneter, als Übergangsknoten fungierender Netzwerkknoten ist Teil eines lokalen Netzes, wie beispielsweise eines Metro-Netzes, in welchem die anderen Netzwerkknoten dieses lokalen Netzes mit diesem Übergangsknoten über vorzugsweise QKD-fähige, aber jedenfalls über die sichere Übertragung von Quantenschlüsseln ermöglichende Punkt-zu-Punkt-Verbindungen verbunden sind. Bei dem lokalen Netz kann es sich (muss es sich aber nicht) um ein vollvermaschtes Netz handeln, in welchem alle Netzwerkknoten direkt untereinander verbunden sind, wobei die entsprechenden Verbindungen für den Einsatz eines QKD-Verfahrens ausgebildet sind. Das heißt, in einem entsprechenden vollvermaschten, QKD-geschützten lokalen Netz steht jeder Netzwerkknoten mit den anderen Netzwerkknoten in einer QKD-Beziehung und verfügt demnach mit jedem Netzwerkknoten des lokalen Netzes, aufgrund Austauschs nach einem QKD-Verfahren, jeweils über gemeinsame quantensichere Schlüssel. Die Punkt-zu-Punkt-Verbindungen zwischen den Netzwerkknoten des lokalen Netzes umfassen, unabhängig davon, ob dieses als vollvermaschtes Netz ausgebildet ist oder nicht, einen Quantenkanal und einen zugehörigen, breitbandigen klassischen Kanal für Steuersignale und sonstige bei der gleichzeitigen gemeinsamen Schlüsselerzeugung erforderliche, nicht über den Quantenkanal übertragene Daten.

Innerhalb des jeweiligen lokalen Netzes fungiert der erfindungsgemäße, die Aufgabe lösende Netzwerkknoten insoweit als ein Übergangsknoten, als über ihn eine Verbindung zu mindestens einem anderen lokalen Netz, das heißt zu einem Übergangsknoten eines solchen anderen lokalen Netzes, besteht. Dabei geht die Erfindung, wie bereits zum Verfahren ausgeführt, von einer Konstellation aus, bei welcher die letztgenannte Verbindung selbst nicht für den Schlüsselaustausch nach einem QKD-Verfahren ausgebildet ist.

Physisch kann es sich bei der zwischen zwei lokalen Netzen bestehenden Verbindung - wie ebenfalls bereits ausgeführt - beispielsweise um eine Glasfaserverbindung, um eine Mobilfunkverbindung oder um eine Satellitenverbindung handeln. Zwar wäre im Zusammenhang mit einer Satellitenverbindung die Nutzung des QKD-Prinzips auch dann möglich, wenn die beiden über sie verbundenen lokalen Netze, wie zum Beispiel Metro-Netze, einen Abstand von deutlich mehr als 100 Kilometer, beispielsweise von mehreren Hundert Kilometern aufweisen. Jedoch wäre dies mit beträchtlichem Aufwand und Kosten verbunden. Soweit daher die Rede davon ist, dass die betreffende Verbindung nicht für einen Schlüsselaustausch nach einem QKD-Verfahren ausgebildet ist, soll dies daher nicht die grundsätzliche Unmöglichkeit einer Ertüchtigung dieser Verbindung für einen QKD-Austausch zum Ausdruck bringen, sondern klarstellen, dass diese Verbindung im Hinblick auf ihre im Rahmen der Erfindung angesprochene Auslegung nicht für die Nutzung eines QKD-Verfahrens vorgesehen ist. Vielmehr erfolgt der Austausch eines oder gegebenenfalls natürlich auch mehrerer quantensicherer Schlüssel, welche(r) von je einem Netzwerkknoten beider lokaler Netze als gemeinsamer Nutzschlüssel zu verwenden ist/sind, unter Nutzung des erfindungsgemäßen Verfahrens.

Der erfindungsgemäße Übergangsknoten verfügt zunächst jedenfalls über Mittel zur Erzeugung von Quantenschlüsseln, wobei diese, im Hinblick auf die zwischen ihm und den anderen Netzwerkknoten desselben lokalen Netzes bestehenden Verbindungen, Mittel für die Erzeugung und den Austausch (die Verteilung - Distribution) von Quantenschlüsseln nach einem QKD-Verfahren (hier als QKD-Server bezeichnet) umfassen. Bestandteile der vorgenannten Mittel zur Erzeugung und Verteilung von Quantenschlüsseln sind ein Schlüsselspeicher und ein herstellerabhängiges, das heißt nach den Erfordernissen des Herstellers des QKD-Systems designtes Schlüsselmanagement. Darüber hinaus umfasst der Übergangsknoten ein herstellerunabhängiges, nämlich ein providerabhängiges Schlüsselmanagement, welches ebenso wie das herstellerabhängige Schlüssel-management Zugriff auf den lokalen Schlüsselspeicher des Übergangsknotens hat. Das vorgenannte providerabhängige Schlüsselmanagement ist dabei nach den Bedürfnissen des Providers, also des Betreibers des Netzwerkknotens beziehungsweise Übergangsknotens, designt.

Erfindungsgemäß verfügt der Übergangsknoten darüber hinaus über mit dem providerabhängigen Schlüsselmanagement in einer Wirkverbindung stehende Mittel zur Ausführung eines PQC-Verschlüsselungsverfahrens (nachfolgend auch als PQC-Server bezeichnet). Der entsprechende PQC-Server ist als eine hardwaretechnisch gehärtete Einheit (HSM) ausgeführt. Das heißt, es ist dem Grunde nach nicht möglich, an innerhalb der betreffenden Einheit befindliche Daten beziehungsweise verarbeitete Bitsequenzen heranzukommen, ohne die entsprechende Einheit und vorzugsweise auch die darin befindlichen Daten selbst zu zerstören.

Bei der zuvor im Zusammenhang mit dem erfindungsgemäßen Verfahren und bei der Beschreibung des Aufbaus des erfindungsgemäßen Übergangsknotens beschriebenen Architektur mit mindestens zwei jeweils einen solchen

Übergangsknoten aufweisenden lokalen Netzen, handelt es sich im Hinblick darauf, dass der jeweilige Übergangsknoten jedes der lokalen Netze mit den anderen Netzwerkknoten des jeweils selben lokalen Netzes in einer QKD-Beziehung steht, um eine Trusted Node Architektur zur Quantenschlüsselverteilung. In diese Trusted Node Architektur ist gemäß der Erfindung eine durch PQC gesicherte Strecke inkludiert.

Anhand von Zeichnungen soll nachfolgend ein sich auf die Verbindung zweier Metro-Netze beziehendes Ausführungsbeispiel für die Erfindung gegeben und erläutert werden. Es sei insoweit an dieser Stelle nochmals betont, dass die Erfindung in gleicher Weise zur Verbindung zweier beliebiger, das heißt nicht als Metro-Netze ausgebildeter lokaler Netze oder auch für die Verbindung eines Metro-Netzes mit einem anderen, nicht explizit als Metro-Netz ausgewiesenen oder aufzufassenden lokalen Netzes eingesetzt werden kann. Demnach stellt das nachfolgend erläuterte Ausführungsbeispiel keine Beschränkung der Erfindung auf Metro-Netze, respektive auf Übergangsknoten von Metro-Netzen dar. Die Zeichnungen zeigen:
- Fig. 1:: eine schematische Darstellung von Teilen zweier miteinander verbundener Metro-Netze, welche jeweils einen erfindungsgemäßen Übergangsknoten aufweisen,
- Fig. 2:: eine schematische Darstellung für eine beispielhafte räumliche Anordnung mehrerer nach der Erfindung miteinander verbundener Metro-Netze.

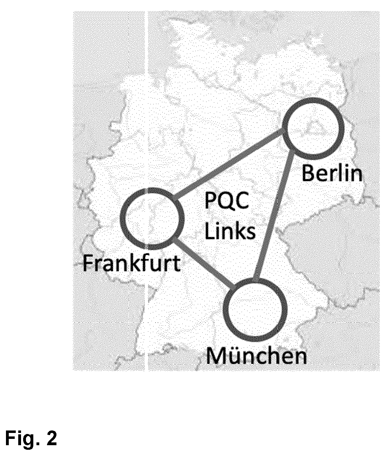

Zunächst soll kurz auf die in der Fig. 2 dargestellte beispielhafte räumliche Anordnung von Metro-Netzen eingegangen werden. Die Fig. 2 zeigt eine grobe Übersichtskarte Deutschlands mit drei (beispielhaften) Metro-Netzen, die als lokale Netze im Bereich der Städte Berlin, Frankfurt und München ausgebildet sind. Mit Bezug auf die Erfindung wird hierbei beispielhaft von vollvermaschten Metro-Netzen (lokalen Netzen 1₁, 1₂) ausgegangen, in denen alle Netzwerkknoten eines jeweiligen Metro-Netzes untereinander in einer QKD-Beziehung stehen.

Insbesondere aufgrund der räumlichen Distanzen handelt es sich aber bei den zwischen den drei Metro-Netzen bestehenden Verbindungen um Verbindungen, die nicht für die Nutzung eines QKD-Verfahrens ausgebildet sind.

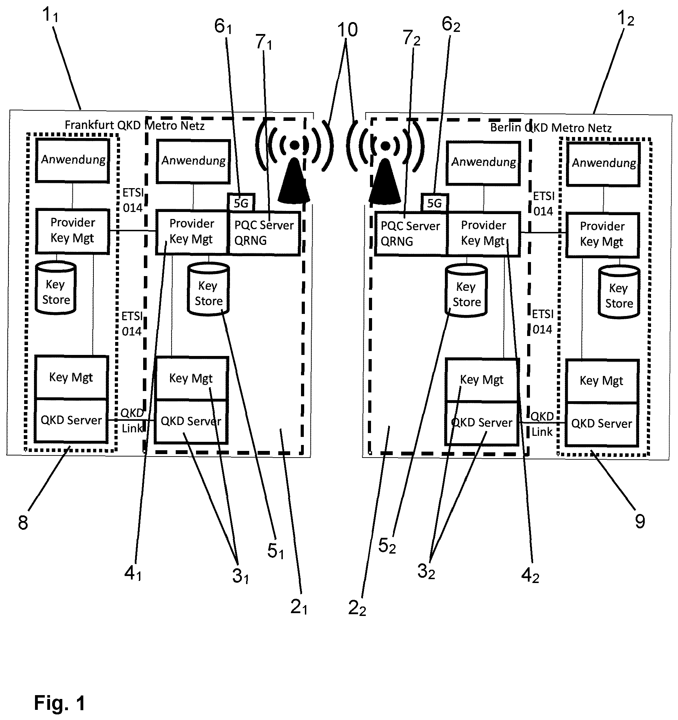

Die Fig. 1 zeigt in einer schematischen Darstellung Teile zweier gemäß der Fig. 2 unter Nutzung der Erfindung als lokale Netze 1₁, 1₂ untereinander verbundener Metro-Netze. Angedeutet sind dabei jeweils zwei Netzwerkknoten 2₁, 8 und 2₂, 9 je Metro-Netz. Bei jeweils einem dieser Knoten handelt es sich um einen zur Durchführung des erfindungsgemäßen Verfahrens ausgebildeten Übergangsknoten 2₁, 2₂ im zuvor erläuterten Sinne, über welchen eine die Nutzung des erfindungsgemäßen Verfahren ermöglichende Verbindung zu dem anderen Metro-Netz (lokalen Netz 1₁, 1₂) hergestellt ist. Der jeweilige Übergangsknoten 2₁, 2₂ umfasst einen QKD-Server 3₁, 3₂ mit angeschlossenem herstellerabhängigem Schlüsselmanagement (Key Mgt), welcher mit dem anderen in der Zeichnung dargestellten (das heißt vorzugsweise weiteren) Netzwerkknoten 8, 9 desselben lokalen Netzes 1₁, 1₂ (Metro-Netzes) über einen QKD-Link nach beispielsweise ETSI 014 (einem durch das European Telecommunications Standards Institute für die QKD-Übertragung standardisierten Protokoll) verbunden ist.

Bestandteile des Übergangsknotens 2₁, 2₂ sind ferner ein lokaler Schlüsselspeicher 5₁, 5₂ (Key Store) und ein providerabhängiges Schlüssel-Management 4₁, 4₂ (Provider Key Mgt). In erfindungsgemäßer Weise steht das providerabhängige Management 4₁, 4₂ in einer Wirkverbindung mit einem PQC-Server, welcher den Schlüsselaustausch mit dem PQC-Server 7₁, 7₂ des Übergangsknotens 2₁, 2₂ des anderen Metro-Netzes (lokalen Netzes 1₁, 1₂) gemäß der Erfindung unter Einbeziehung eines PQC-Verfahrens ermöglicht. Die physische Verbindung 10 zwischen den beiden Metro-Netzen, respektive lokalen Netzen 1₁, 1₂, besteht gemäß dem Beispiel über eine Mobilfunkverbindung. Der oberhalb des Providerschlüsselmanagements 4₁, 4₂ (Provider Key Mgt) dargestellte, mit Anwendung beschriftete Block symbolisiert die Anwendungsschicht, in welcher später auf der Anwendungsebene die Verwendung des gemäß der Erfindung ausgetauschten quantensicheren Nutzschlüssels erfolgt.

Beim Austausch des Nutzschlüssels zwischen dem Metro-Netz in Frankfurt und dem Metro-Netz in Berlin sowie bei dessen nachfolgender Anwendung vollzieht sich beispielsweise folgender Ablauf:
Der Frankfurter PQC-Server 7₁ fragt nach erfolgreicher Authentifizierung des Berliner PQC-Servers 7₂ nach dessen öffentlichen PQC-Schlüssel. Mit diesem Schlüssel verschlüsselt der Frankfurter PQC-Server 7₁, eine Zufallszahl, das sogenannte "Shared Secret", und sendet es an den Berliner PQC-Server 7₂. Der Berliner PQC-Server 7₂ entschlüsselt die Zufallszahl mit seinem privaten PQC-Schlüssel. Das nun auf beiden Seiten vorliegende "Shared Secret" wird dann dazu verwendet, mittels eines robusten symmetrischen Verschlüsselungsverfahrens, zum Beispiel AES 256 (mit AES = Advanced Encryption Standard), einen Satz von Zufallszahlen, die zum Beispiel über einen "Quanten Random Number Generator" (QRNG) oder über ein QKD-System erzeugt wurden, von Frankfurt nach Berlin zu senden. Nach erfolgreicher Übertragung speichern die beiden PQC-Server 7₁, 7₂ die Zufallszahlen über das jeweilige providerspezifische Key Management 4₁, 4₂, respektive Schlüsselmanagement im lokalen Schlüsselspeicher 5₁, 5₂ (Key Store) am Endpunkt. In letzteren Schlüsselspeichern 5₁, 5₂ befinden sich nun Schlüssel, die jeweils in beiden lokalen Netzen 1₁, 1₂, das heißt insbesondere bei deren Übergangsknoten 2₁, 2₂ bekannt sind.

Der Austausch von PQC-Schlüsseln wird regelmäßig, in zeitlichen Abständen von zum Beispiel einigen Minuten, wiederholt, wobei die Zeitdauer beispielsweise auch abhängig von der Datenübertragungsrate sein kann. So bedürfen Terabit/s Verbindungen einer schnelleren Schlüsselaustauschrate, bis hin in den Sekundenbereich. Somit wird sichergestellt, dass zu jeder Zeit genügend Quantenschlüssel zur sicheren Kommunikation zwischen Teilnehmern in den Metro-Netzen (lokalen Netzen 1₁, 1₂) zur Verfügung stehen.

Technisch realisiert wird das PQC-Key Encapsulation Verfahren über open source Programme, wie "open quantum safe", welches alle Verschlüsselungsalgorithmen, die sich derzeit im Standardisierungsverfahren des NIST (National Institute of Standards and Technology der U.S.A) befinden, implementiert. Die aktuell verfügbaren Verfahren werden am Ende der Beschreibung aufgelistet.

Fordert nun eine Applikation (Anwendung auf der Anwendungsebene) aus dem Frankfurter Metro-Netz eine sichere Kommunikation mit einem Teilnehmer aus dem Berliner Metro-Netz an, so stellen die providerspezifischen Schlüsselmanagement Systeme 4₁, 4₂ den Applikationen identische Schlüssel bereit. In einem ersten Schritt wird ermittelt, über welche Netzwerkknoten der Schlüsselaustausch erfolgen muss - vorliegend ist dies eine Punkt-zu-Punkt Verbindung (QKD) im Frankfurter Metro-Netz, dann die zwischen den Übergangsknoten bestehende PQC-Verbindung von Frankfurt nach Berlin und im Berliner Metro-Netz wiederum eine Punkt-zu-Punkt Verbindung (QKD). In jedem der vier Netzwerkknoten 2₁, 8, 2₂, 9 sind jeweils mit den Nachbarknoten gemeinsame Schlüssel gespeichert.

Zum Beispiel hat der rechte als Übergangsknoten 2₁ fungierende Frankfurter QKD-Knoten dieselben quantensicheren Schlüssel wie der linke Frankfurter QKD-Knoten (Netzwerkknoten 8). Diese stellen folglich gemeinsame Schlüssel für den linken Frankfurter Netzwerkknoten (Netzwerkknoten 8) und den Frankfurter Übergangsknoten 2₁ (Übergangsknoten des Frankfurter Metro-Netzes) zum Berliner Metro-Netz dar. Ebenso verfügt der rechte Berliner QKD-Knoten (Netzwerkknoten 9) über dieselben quantensicheren Schlüssel wie der linke Berliner QKD-Knoten (Übergangsknoten 2₂). Diese Quantenschlüssel bilden folglich gemeinsame Schlüssel für den rechten Berliner Netzwerkknoten 9 und den Berliner Übergangsknoten 2₂ (Übergangsknoten des Berliner Metro-Netzes) zum Frankfurter Metro-Netz.

In einem zweiten Schritt wird nun eine Zufallszahl, die gesteuert durch das Schlüsselmanagement 4₁ in dem linken Frankfurter Netzwerkknoten 8 erzeugt wird, mit einem Quantenschlüssel, den dieser mit dem Frankfurter Übergangsknoten 2₁ teilt, symmetrisch verschlüsselt. Nachdem diese Nachricht (Bitsequenz) an den rechten Frankfurter QKD-Knoten, das heißt an den Frankfurter Übergangsknoten 2₁ versendet wurde, entschlüsselt dieser die Zufallszahl und verschlüsselt sie wieder symmetrisch mit einem Quantenschlüssel des mit dem linken Berliner QKD-Knoten, das heißt dem Berliner Übergangsknoten 2₂ gemeinsamen Schlüsselvorrats. In einem analogen Schritt wird die Zufallszahl im linken Berliner Übergangsknoten 2₂ ent- und mit einem weiteren, mit dem rechten Berliner Netzwerkknoten 9 (QKD-Knoten) gemeinsamen Quantenschlüssel wieder verschlüsselt. Der rechte Berliner Netzwerkknoten 9 (QKD Knoten) entschlüsselt schließlich die Nachricht (Bitsequenz) und stellt seiner Applikation (Anwendung) die Zufallszahl als quantensicheren Schlüssel (Nutzschlüssel) bereit.

Somit haben die Applikationen (Anwendungen) an den Endpunkten, das heißt bei dem linken Frankfurter Netzwerkknoten 8 (QKD-Knoten) und bei dem rechten Berliner Netzwerkknoten 9 (QKD Knoten) einen identischen Nutzschlüssel, den sie für die gesicherte Übertragung und/oder die Verschlüsselung untereinander auszutauschender Nutzdaten verwenden können. Der linke Frankfurter Netzwerkknoten 8 und der rechte Berliner Netzwerkknoten 9 können dabei auch einer Nutzerdomäne angehören, beispielsweise einem Unternehmen, dass seine quantensicheren Schlüssel selber erzeugt.

Durch das erfindungsgemäße Verfahren mit einer bei seiner Übertragung erfolgenden bitweisen XOR-Verknüpfung des Nutzschlüssels einerseits bei der Übertragung von einem beliebigen Netzwerkknoten 8, 9 eines Metro-Netzes (lokalen Netzes 1₁, 1₂) an den Übergangsknoten 2₁, 2₂ desselben Metro-Netzes und andererseits bei dessen Eingang bei diesem Übergangsknoten 2₁, 2₂ mit unmittelbarer Weiterleitung als bitweise XOR-verknüpfte Bitsequenz an ein anderes lokales Netz 1₁, 1₂ sowie die sich in dem empfangenden Metro-Netz (lokales Netz 1₁, 1₂) in analogerweise vollziehenden Übertragungsvorgänge ist gewährleistet, dass der Nutzschlüssel innerhalb der Providernetze, also der Metro-Netze nicht offengelegt wird. Dies gilt zumal die Ver- und Entschlüsselungsvorgänge in den Netzwerkknoten 2₁, 8, 2₂, 9 in geeigneten Hardware-Sicherheitsmodulen, das heißt Hardware Secured Modules (HSM), erfolgen.

Zur PQC-Verschlüsselung und für das Signieren von Nachrichten mittels PQC sind bereits mehrere Verfahren bekannt geworden. Da es sich bei diesen PQC-Verfahren um eine noch verhältnismäßig neue Technik handelt, sind allenfalls einige davon schon in gewisser Weise etabliert. Ungeachtet dessen sollen nachfolgend die vorstehenden Ausführungen vervollständigend, jedoch ohne Anspruch auf Vollständigkeit, insoweit bekannt gewordene Verfahren genannt werden.

### Verfahren zur PQC-Verschlüsselung

'BIKE1-L1-CPA', 'BIKE1-L3-CPA', 'BIKE1-L1-FO', 'BIKE1-L3-FO', 'Kyber512', 'Kyber768', 'Kyber1024', 'Kyber512-90s', 'Kyber768-90s', 'Kyber1024-90s', 'LEDAcryptKEM-LT12', 'LEDAcryptKEM-LT32', 'LEDAcryptKEM-LT52', 'NewHope-512-CCA', 'NewHope-1024-CCA', 'NTRU-HPS-2048-509', 'NTRU-HPS-2048-677', 'NTRU-HPS-4096-821', 'NTRU-HRSS-701', 'LightSaber-KEM', 'Saber-KEM', 'FireSaber-KEM', 'BabyBear', 'BabyBearEphem', 'MamaBear', 'MamaBearEphem', 'PapaBear', 'PapaBearEphem', ,FrodoKEM-640-AES', 'FrodoKEM-640-SHAKE', 'FrodoKEM-976-AES', 'FrodoKEM-976-SHAKE', 'FrodoKEM-1344-AES', 'FrodoKEM-1344-SHAKE', 'SIDH-p434', 'SIDH-p503', 'SIDH-p610', ,SIDH-p751', 'SIDH-p434-compressed', 'SIDH-p503-compressed', 'SIDH-p610-compressed', 'SIDH-p751-compressed', 'SIKE-p434', 'SIKE-p503', 'SIKE-p610', 'SIKE-p751', 'SIKE-p434-compressed', 'SIKE-p503-compressed', 'SIKE-p610-compressed', 'SIKE-p751-compressed'.

### PQC-Signaturverfahren

'DILITHIUM_2', 'DILITHIUM_3', 'DILITHIUM_4', 'MQDSS-31-48', MQDSS-31-64', SPHINCS+-Haraka-128f-robust', SPHINCS+-Haraka-128f-simple', 'SPHINCS+-Haraka-128s-robust', 'SPHINCS+-Haraka-128s-simple', 'SPHINCS+-Haraka-192f-robust', 'SPHINCS+-Haraka-192f-simple', 'SPHINCS+-Haraka-192s-robust', 'SPHINCS+-Haraka-192s-simple', 'SPHINCS+-Haraka-256f-robust', 'SPHINCS+-Haraka-256f-simple', 'SPHINCS+-Haraka-256s-robust', 'SPHINCS+-Haraka-256s-simple', 'SPHINCS+-SHA256-128f-robust', ,SPHINCS+-SHA256-128f-simple', 'SPHINCS+-SHA256-128s-robust', 'SPHINCS+-SHA256-128s-simple', 'SPHINCS+-SHA256-192f-robust', 'SPHINCS+-SHA256-192f-simple', 'SPHINCS+-SHA256-192s-robust', 'SPHINCS+-SHA256-192s-simple', 'SPHINCS+-SHA256-256f-robust', 'SPHINCS+-SHA256-256f-simple', 'SPHINCS+-SHA256-256s-robust', 'SPHINCS+-SHA256-256s-simple', 'SPHINCS+-SHAKE256-128f-robust', 'SPHINCS+-SHAKE256-128f-simple', 'SPHINCS+-SHAKE256-128s-robust', 'SPHINCS+-SHAKE256-128s-simple', 'SPHINCS+-SHAKE256-192f-robust', 'SPHINCS+-SHAKE256-192f-simple', 'SPHINCS+-SHAKE256-192s-robust', 'SPHINCS+-SHAKE256-192s-simple', 'SPHINCS+-SHAKE256-256f-robust', 'SPHINCS+-SHAKE256-256f-simple', 'SPHINCS+-SHAKE256-256s-robust', 'SPHINCS+-SHAKE256-256s-simple',m 'picnic_L1_FS', 'picnic_L1_UR', 'picnic_L3_FS', 'picnic_L3_UR', 'picnic_L5_FS', 'picnic_L5_UR', 'picnic2_L1_FS', 'picnic2_L3_FS', 'picnic2_L5_FS', 'qTesla-p-I', 'qTesla-p-III'

## Patentansprüche

1. Verfahren zum Austausch eines quantensicheren Schlüssels zwischen Netzwerkknoten (2₁; 2₂; 8; 9) zweier lokaler Netze (1₁; 1₂), bei dem ein zur späteren Verwendung für einen sicheren Datenaustausch auf einem der Layer des OSI-Schichtenmodels von einem dafür ausgebildeten Netzwerkknoten (2₁; 2₂; 8; 9) eines der beiden lokalen Netze generierter quantensicherer Schlüssel als Nutzschlüssel an einen Netzwerkknoten (2₁; 2₂; 8; 9) des anderen lokalen Netzes (1₁; 1₂) übertragen wird über eine zwischen Übergangsknoten (2₁; 2₂) beider lokaler Netze (1₁; 1₂) bestehende, nicht zur Übertragung quantensicherer Schlüssel nach einem QKD-Verfahren ausgebildete Verbindung (10), **dadurch gekennzeichnet, dass** der Nutzschlüssel von den Übergangsknoten (2₁; 2₂) über die zwischen ihnen bestehende Verbindung (10) symmetrisch verschlüsselt übertragen wird, durch eine bitweise XOR-Verknüpfung mit einem Quantenschlüssel, der, gesteuert durch ein jeweiliges lokales Schlüsselmanagement (4₁; 4₂) der Übergangsknoten (2₁; 2₂) in den beiden lokalen Netzen (1₁; 1₂), als gemeinsamer Schlüssel entnommen wird aus einem in beiden Übergangsknoten (2₁; 2₂) lokal vorliegenden gemeinsamen, mindestens diesen einen zur Verschlüsselung des Nutzschlüssels verwendeten Quantenschlüssel enthaltenden Schlüsselvorrat, wobei vor der Übertragung des Nutzschlüssels lokal in den Übergangsknoten (2₁; 2₂) abgelegte gemeinsame Quantenschlüssel in einem dieser Übergangsknoten (2₁; 2₂) generiert und an den anderen Übergangsknoten (2₁; 2₂) verschlüsselt übertragen werden, mittels eines Quantenschlüssels, der zuvor zwischen den Übergangsknoten (2₁; 2₂) als Shared Secret unter Anwendung eines PQC-Verfahrens, das heißt eines Verfahrens der Post Quantum Cryptography, ausgetauscht wird.

2. Verfahren nach Anspruch 1, **dadurch gekennzeichnet, dass** der quantensichere Nutzschlüssel zwischen Netzwerkknoten (2₁; 2₂; 8; 9) zweier, jeweils ein Metro-Netz (MAN) ausbildender lokaler Netze (1₁; 1₂) ausgetauscht wird.

3. Verfahren nach Anspruch 1 oder 2, **dadurch gekennzeichnet, dass** der zur verschlüsselten Übertragung des oder der gemeinsamen, lokal in den Übergangsknoten (2₁; 2₂) abgelegten Quantenschlüssel verwendete, als Shared Secret zwischen den Übergangsknoten (2₁; 2₂) mithilfe des PQC-Verfahrens verschlüsselt übertragene Quantenschlüssel nach einem Public Key Verfahren per Key Encapsulation ausgetauscht wird.

4. Verfahren nach einem der Ansprüche 1 bis 3, **dadurch gekennzeichnet, dass** mithilfe des nach dem PQC-Verfahren zwischen den Übergangsknoten (2₁; 2₂) ausgetauschten Quantenschlüssels von einem Übergangsknoten (2₁; 2₂) an den anderen Übergangsknoten (2₁; 2₂) mehrere als gemeinsame Schlüssel zu nutzende Quantenschlüssel verschlüsselt übertragen werden, wobei sie von dem diese Quantenschlüssel generierenden und in einem eigenen lokalen Schlüsselspeicher (5₁; 5₂) ablegenden Übergangsknoten (2₁; 2₂) mittels einer Blockchiffre verschlüsselt und an den anderen Übergangsknoten (2₁; 2₂), zur Ablage in dem dortigen, den Vorrat gemeinsamer Quantenschlüssel aufnehmenden lokalen Speicher (5₁; 5₂) übertragen werden.

5. Verfahren nach Anspruch 4, **dadurch gekennzeichnet, dass** die von den Übergangsknoten (2₁; 2₂) als gemeinsame Schlüssel zur verschlüsselten Übertragung eines Nutzschlüssels ausgetauschten Quantenschlüssel mittels des AES-Verfahrens, das heißt nach dem Advanced Encryption Standard, verschlüsselt von einem Übergangsknoten (2₁; 2₂) an den anderen Übergangsknoten (2₁; 2₂) übertragen werden.

6. Verfahren nach einem der Ansprüche 1 bis 5, **dadurch gekennzeichnet, dass** die Übergangsknoten (2₁; 2₂), nämlich an oder in den Übergangsknoten (2₁; 2₂) für die PQC-Verschlüsselung, das heißt für die Verschlüsselung nach einem PQC-Verfahren ausgebildete Mittel (7₁; 7₂), sich vor der erstmaligen und jeder erneuten Anwendung des PQC-Verfahrens untereinander authentifizieren.

7. Verfahren nach einem der Ansprüche 1 bis 6, wobei es sich bei den Netzwerkknoten (8; 9), welche den Nutzschlüssel zur späteren Verwendung für einen sicheren Datenaustausch untereinander austauschen um Netzwerkknoten (8; 9) zweier verschiedener lokaler Netze (1₁; 1₂), aber nicht um die Übergangsknoten (2₁; 2₂) an den Enden der Verbindung (10) zwischen den beiden lokalen Netzen (1₁; 1₂) handelt, **dadurch gekennzeichnet,**
a.) **dass** der den quantensicheren Nutzschlüssel generierende und in einem lokalen Schlüsselspeicher ablegende Netzwerknoten (8; 9) eines ersten der beiden lokalen Netze (1₁; 1₂) diesen Nutzschlüssel an den Übergangsknoten (2₁; 2₂) dieses ersten lokalen Netzes (1₁; 1₂) in einer bitweisen XOR-Verknüpfung mit einem, aufgrund Austausches nach einem QKD-Verfahren, bei ihm und bei diesem Übergangsknoten (2₁; 2₂) des ersten lokalen Netzes (1₁; 1₂) als gemeinsamer Schlüssel vorliegenden Quantenschlüssel über eine Punkt-zu-Punkt-Verbindung überträgt und
b.) **dass** der die gemäß a) gebildete XOR-Verknüpfung mit dem Nutzschlüssel empfangende Übergangsknoten (2₁; 2₂) des ersten lokalen Netzes (1₁; 1₂) diese Verknüpfung sowohl abermals mit dem, von dem den Nutzschlüssel generierenden Netzwerkknoten (8; 9) zur Bildung der Verknüpfung verwendeten gemeinsamen Quantenschlüssel sowie außerdem mit einem Quantenschlüssel verknüpft, den er aus dem mit dem Übergangsknoten (2₁; 2₂) des anderen, zweiten lokalen Netzes (1₁; 1₂) gemeinsamen Schlüsselvorrat entnimmt und die daraus resultierende Bitsequenz an den Übergangsknoten (2₁; 2₂) des zweiten lokalen Netzes (1₁; 1₂) überträgt und
c.) **dass** der die von dem Übergangsknoten (2₁; 2₂) des ersten lokalen Netzes (1₁; 1₂) ausgesendete Bitsequenz empfangende Übergangsknoten (2₁; 2₂) des zweiten lokalen Netzes (1₁; 1₂) diese Bitsequenz abermals mit dem gemäß b) aus dem gemeinsamen Schlüsselvorrat beider Übergangsknoten (2₁; 2₂) verwendeten Quantenschlüssel sowie mit einem, aufgrund Austausches nach einem QKD-Verfahren, bei diesem Übergangsknoten (2₁; 2₂) des zweiten lokalen Netzes (1₁; 1₂) und bei dem für den Empfang des Nutzschlüssels bestimmten Netzwerkknoten (8; 9) des zweiten lokalen Netzes (1₁; 1₂) als gemeinsamer Schlüssel vorliegenden Quantenschlüssel bitweise XOR-verknüpft und die dabei entstehende Bitsequenz an den für den Empfang des Nutzschlüssels bestimmten Netzwerkknoten (8; 9) innerhalb desselben lokalen Netzes (1₁; 1₂) über eine Punkt-zu-Punkt-Verbindung überträgt und
d.) **dass** der für den Empfang des Nutzschlüssels bestimmte Netzwerkknoten (8; 9) diesen aus der gemäß c) an ihn übertragenen Bitsequenz extrahiert und in einem lokalen Schlüsselspeicher (5₁; 5₂) ablegt, wobei dieser Netzwercknoten (8; 9) den Nutzschlüssel aus der von ihm empfangenen Bitsequenz extrahiert, indem er diese Bitsequenz abermals mit dem gemäß c) verwendeten, aufgrund Austausches nach einem QKD-Verfahren, bei ihm und bei dem Übergangsknoten (2₁; 2₂) desselben lokalen Netzes (1₁; 1₂) als gemeinsamer Schlüssel vorliegenden Quantenschlüssel bitweise XOR-verknüpft.

8. Übergangsknoten (2₁; 2₂), nämlich Netzwerkknoten in einem lokalen Netz (1₁; 1₂), welcher mit anderen Netzwerkknoten desselben lokalen Netzes (1₁; 1₂) in jeweils einer Verbindung zum Austausch quantensicherer Schlüssel steht und am Ende einer Verbindung dieses lokalen Netzes (1₁; 1₂) zu einem anderen lokalen Netz (1₁; 1₂) angeordnet ist, wobei der Übergangsknoten (2₁; 2₂) umfasst
- mindestens eine Funktionseinheit (3₁; 3₂) zur Erzeugung von Quantenschlüsseln und für den Austausch von Quantenschlüsseln nach einem QKD-Verfahren,
- mindestens eine Funktionseinheit (4₁; 4₂) für das lokale Schlüsselmanagement und mindestens einen lokalen Schlüsselspeicher (5₁; 5₂),
- mindestens eine Funktionseinheit (6₁; 6₂) zum Aufbau einer Verbindung zu einem Übergangsknoten (2₁; 2₂) des anderen lokalen Netzes (1₁; 1₂) zur verschlüsselten Übertragung eines Nutzschlüssels, nämlich eines zur späteren Verwendung für einen sicheren Datenaustausch auf einem der Layer des OSI-Schichtenmodels von einem dafür ausgebildeten Netzwerkknoten (2₁; 2₂; 8; 9) eines der lokalen Netze (1₁; 1₂) generierten quantensicheren Schlüssels, **dadurch gekennzeichnet, dass** der Übergangsknoten (2₁; 2₂) ein Hardware Security Module HSM mit mindestens einem PQC-Server (7₁; 7₂) aufweist, nämlich eine hardwaretechnisch gehärtete Einheit, welche außerdem ausgebildet ist für eine bitweise XOR-Verknüpfung von Bitsequenzen, nämlich einer den in einem der lokalen Netze (1₁; 1₂) generierten, zwischen den Übergangsknoten (2₁; 2₂) der lokalen Netze (1₁; 1₂) symmetrisch verschlüsselt übertragenen Nutzschlüssel aufnehmenden Bitsequenz mit der Bitsequenz eines, gesteuert durch das lokale Schlüsselmanagement (4₁; 4₂) des Übergangsknotens (2₁; 2₂), aus dem Schlüsselspeicher (5₁; 5₂) mit dem lokalen Schlüsselvorrat des Übergangsknotens (2₁; 2₂) entnommenen Quantenschlüssels, welcher vor der Übertragung des Nutzschlüssels in einem der Übergangsknoten (2₁; 2₂) generiert, mittels des mindestens einen PQC-Servers (7₁; 7₂) des HSM unter Anwendung eines PQC-Verfahrens, das heißt eines Verfahrens der Post Quantum Cryptography, sowie eines zuvor zwischen den Übergangsknoten (2₁; 2₂) als Shared Secret ausgetauschten Quantenschlüssels verschlüsselt zwischen den Übergangsknoten (2₁; 2₂) ausgetauscht und lokal in den Übergangsknoten (2₁; 2₂) abgelegt wurde.

9. Übergangsknoten (2₁; 2₂) nach Anspruch 8, **dadurch gekennzeichnet, dass** dieser als Bestandteil eines Metro-Netzes ausgebildet ist.

## Claims

1. Method for exchanging a quantum secure key between network nodes (2₁; 2₂; 8; 9) of two local area networks (1₁; 1₂) in which a quantum secure key generated for later use for a secure data exchange on one of the layers of the OSI layer model of a network node (2₁; 2₂; 8; 9) designed for this purpose of one of the two local area networks is transferred as a useful key to a network node (2₁; 2₂; 8; 9) of the other local area network (1₁; 1₂) via a connection (10) existing between transition nodes (2₁; 2₂) of both local area networks (1₁; 1₂) and not designed for transferring quantum secure keys according to a QKD method, **characterized in that** the useful key is transferred in a symmetrically encrypted manner by the transition nodes (2₁; 2₂) via the connection (10) existing between them, by a bitwise XOR linkage with a quantum key which, controlled by a respective local key management (4₁; 4₂) of the transition nodes (2₁; 2₂) in the two local area networks (1₁; 1₂), is taken as a common key from a joint key store locally present in both transition nodes (2₁; 2₂) and containing at least this quantum key used to encrypt the useful key, wherein before the transfer of the useful key, common quantum keys locally stored in the transition nodes (2₁; 2₂) are generated in one of these transition nodes (2₁; 2₂) and transferred in an encrypted manner to the other transition node (2₁; 2₂), by means of a quantum key which is previously exchanged between the transition nodes (2₁; 2₂) as a shared secret with application of a PQC method, i.e. a method of post quantum cryptography.

2. Method as claimed in claim 1, **characterized in that** the quantum secure useful key is exchanged between network nodes (2₁; 2₂; 8; 9) of two local area networks (1₁; 1₂) each designed as a metro area network (MAN).

3. Method as claimed in claim 1 or 2, **characterized in that** the quantum key, which is used for the encrypted transfer of the common quantum key or keys stored locally in the transition nodes (2₁; 2₂) and transferred in an encrypted manner as a shared secret between the transition nodes (2₁; 2₂) with the aid of the PQC method, is exchanged according to a public key method via key encapsulation.

4. Method as claimed in any one of claims 1 to 3, **characterized in that** with the aid of the quantum key exchanged according to the PQC method between the transition nodes (2₁; 2₂), multiple quantum keys to be used as common keys are transferred in an encrypted manner from one transition node (2₁; 2₂) to the other transition node (2₁; 2₂), wherein they are encrypted by the transition nodes (2₁; 2₂) generating these quantum keys and storing them in its own local key memory (5₁; 5₂) by means of a block cipher and transferred to the other transition node (2₁; 2₂) to be deposited in the local memory (5₁; 5₂) therein accommodating the store of common quantum keys.

5. Method as claimed in claim 4, **characterized in that** the quantum keys exchanged by the transition nodes (2₁; 2₂) as common keys for the encrypted transfer of a useful key are transferred in a manner encrypted by means of the AES method, i.e. according to the Advanced Encryption Standard, from one transition node (2₁; 2₂) to the other transition node (2₁; 2₂).

6. Method as claimed in any one of claims 1 to 5, **characterized in that** the transition nodes (2₁; 2₂), namely means (7₁; 7₂) formed at or in the transition nodes (2₁; 2₂) for the PQC encryption, i.e. for the encryption according to a PQC method, authenticate themselves among one another before the initial and each further application of the PQC method.

7. Method as claimed in any one of claims 1 to 6 wherein the network nodes (8; 9) which exchange the useful keys for later use for secure data exchange among one another are network nodes (8; 9) of two different local networks (1₁; 1₂), but not the transition nodes (2₁; 2₂) at the ends of the connection (10) between the two local area networks (1₁; 1₂), **characterized in that**
a) the network node (8; 9) of a first of the two local area networks (1₁; 1₂), which generates the quantum secure useful key and stores it in a local key store, transfers this useful key at the transition nodes (2₁; 2₂) of this first local area network (1₁; 1₂) in a bitwise XOR linkage with a quantum key, which is present as a common key due to an exchange QKD method at it and at this transition node (2₁; 2₂) of the first local area network (1₁; 1₂), via a point-to-point connection, and
b) the XOR linkage formed according to a) with the transition node (2₁; 2₂) of the first local area network (1₁; 1₂) links this linkage once again, both with the common quantum key used by the network node (8; 9) generating the useful key to form the linkage and additionally with a quantum key which it takes from the key store shared with the transition node (2₁; 2₂) of the other second local area network (1₁; 1₂), and transfers the bit sequence resulting therefrom at the transition node (2₁; 2₂) of the second local area network (1₁; 1₂), and
c) the transition node of the second local area network (1₁; 1₂) receiving the bit sequence emitted by the transition node (2₁; 2₂) of the first local area network (1₁; 1₂) XOR-links this bit sequence bitwise once again with the quantum key used according to b) from the common key store of both transition nodes (2₁; 2₂) and with a quantum key, which is present due to exchange according to a QKD method, at this transition node (2₁; 2₂) of the second local area network (1₁; 1₂) and at the network node (8; 9) of the second local area network (1₁; 1₂) determined for the reception of the useful key, and transfers the bit sequence resulting in this case to the network node (8; 9) within the same local area network (1₁; 1₂) determined for the reception of the useful key via a point-to-point connection, and
d) the network node (8; 9) determined for the reception of the useful key extracts it from the bit sequence transferred thereto according to c) and stores it in a local key memory (5₁; 5₂), wherein this network node (8; 9) extracts the useful key from the bit sequence received by it **in that** it XOR-links this bit sequence bitwise once again with the quantum key used according to c) and present, due to exchange according to a QKD method, at it and at the transition node (2₁; 2₂) of the same local area network (1₁; 1₂) as a common key.

8. Transition node (2₁; 2₂), namely network node in a local area network (1₁; 1₂), which is connected in each case to other network nodes of the same local area network (1₁; 1₂) to exchange quantum secure keys and is arranged at the end of a connection of this local network (1₁; 1₂) to another local network (1₁; 1₂), wherein the transition node (2₁; 2₂) comprises
- at least one functional unit (3₁; 3₂) for generating quantum keys and for exchanging quantum keys according to the QKD method,
- at least one functional unit (4₁; 4₂) for local key management and at least one local key memory (5₁; 5₂),
- at least one functional unit (6₁; 6₂) for establishing a connection to a transition node (2₁; 2₂) of the other local area network (1₁; 1₂) for encrypted transfer of a useful key, namely a quantum secure key generated for later use for a secure data exchange on one of the layers of the OSI layer model of a network node (2₁; 2₂; 8; 9) of one of the local area networks (1₁; 1₂) designed for this purpose,
**characterized in that** the transition node (2₁; 2₂) has a hardware security module HSM having at least one PQT server (7₁; 7₂) namely a hardware technology hardened unit, which is additionally designed for a bitwise XOR linkage of bit sequences, namely a bit sequence accommodating a useful key, which is generated in one of the local area networks (1₁; 1₂) and is transferred in a symmetrically encrypted manner between the transition nodes (2₁; 2₂) of the local area networks (1₁; 1₂), with the bit sequence of a quantum key, which was exchanged between the transition nodes (2₁; 2₂) encrypted by a quantum key generated before the transfer of the useful key in one of the transition nodes (2₁; 2₂) and exchanged by means of the at least one PQC server (7₁; 7₂) of the HSM with application of a PQC method, i.e. a method of post quantum cryptography, and was locally stored in the transition node (2₁; 2₂).

9. Transition node (2₁; 2₂) as claimed in claim 8, **characterized in that** it is designed as a component of a metro area network.

## Revendications

1. Procédé destiné à l'échange d'une clé à sécurité quantique entre des nœuds (2₁ ; 2₂ ; 8 ; 9) de deux réseaux locaux (1₁; 1₂), lors duquel une clé à sécurité quantique, destinée à une utilisation ultérieure pour un échange de données sécurisé et générée sur une des couches du modèle de couches OSI d'un nœud réseau (2₁ ; 2₂ ; 8 ; 9) configuré à cet effet d'un des deux réseaux locaux est transmise en tant que clé utile à un nœud (2₁ ; 2₂ ; 8 ; 9) de l'autre réseau local (1₁; 1₂) par le biais d'une liaison (10) existant entre des nœuds de passage (2₁; 2₂) des deux réseaux locaux (1₁; 1₂) et non configurée pour la transmission de clés à sécurité quantique selon un procédé de distribution quantique de clé (QKD), **caractérisé en ce que** la clé utile est transmise depuis les nœuds de passage (2₁ ; 2₂) par le biais de la liaison (10) existant entre ceux-ci, avec un chiffrage symétrique par une fonction XOR bit par bit avec une clé quantique, laquelle, sous le pilotage d'un gestionnaire de clé local respectif (4₁ ; 4₂) des nœuds de passage (2₁ ; 2₂) dans les deux réseaux locaux (1₁ ; 1₂), est extraite en tant que clé commune d'une réserve commune de clés présente localement dans les deux nœuds de passage (2₁ ; 2₂) et contenant au moins cette clé quantique utilisée pour le chiffrage de la clé utile, dans lequel avant la transmission de la clé utile des clés quantiques communes déposées localement dans les nœuds de passage (2₁ ; 2₂) sont générées dans un de ces nœuds de passage (2₁ ; 2₂) et sont transmises de manière chiffrée à l'autre nœud de passage (2₁ ; 2₂), au moyen d'une clé quantique, laquelle est échangée au préalable entre les nœuds de passage (2₁ ; 2₂) en tant que shared secret en utilisant un procédé PQC, c'est-à-dire un procédé de cryptographie post-quantique.

2. Procédé selon la revendication 1, **caractérisé en ce que** la clé utile de sécurité quantique est échangée entre deux nœuds (2₁ ; 2₂ ; 8 ; 9) de deux réseaux locaux (1₁ ; 1₂) formant respectivement un réseau métropolitain (MAN).

3. Procédé selon la revendication 1 ou 2, **caractérisé en ce que** la clé quantique utilisée pour la transmission à chiffrer de la ou des clés quantiques communes déposées localement dans les nœuds de passage (2₁ ; 2₂) et transmise de manière chiffrée en tant que shared secret entre les nœuds de passage (2₁ ; 2₂) à l'aide du procédé PQC est échangée selon un procédé de clé publique par encapsulation de clé.

4. Procédé selon l'une des revendications 1 à 3, **caractérisé en ce qu'**à l'aide de la clé quantique échangée entre les nœuds de passage (2₁ ; 2₂) selon le procédé PQC plusieurs clés quantiques à utiliser comme clés communes sont transmises de manière chiffrée d'un nœud de passage (2₁ ; 2₂) à l'autre nœud de passage (2₁ ; 2₂), dans lequel elles sont chiffrées par le nœud de passage (2₁; 2₂) générant ces clés quantiques et les déposant dans une mémoire de clés locale propre (5₁ ; 5₂) et sont transmises à l'autre nœud de passage (2₁ ; 2₂) pour dépôt dans l'autre mémoire locale (5₁ ; 5₂) accueillant la réserve de clés quantiques communes.

5. Procédé selon la revendication 4, **caractérisé en ce que** la clé quantique échangée par les nœuds de passage (2₁ ; 2₂) en tant que clé commune pour la transmission chiffrée d'une clé utile est transmise d'un nœud de passage (2₁ ; 2₂) à l'autre nœud de passage (2₁ ; 2₂) de manière chiffrée au moyen du procédé AES, à savoir Advanced Encryption Standard.

6. Procédé selon l'une des revendications 1 à 5, **caractérisé en ce que** les nœuds de passage (2₁ ; 2₂), à savoir sur ou dans les nœuds de passage (2₁ ; 2₂) pour le chiffrage PQC, c'est-à-dire pour le chiffrage selon un moyen (7₁; 7₂) réalisé d'après un procédé PQC, s'authentifient l'un à l'autre avant la première utilisation et avant chaque nouvelle utilisation du procédé PQC.

7. Procédé selon l'une des revendications 1 à 6, **caractérisé en ce que** les nœuds réseaux (8 ; 9) s'échangeant la clé utile pour utilisation ultérieure pour un échange de données sécurisé sont des nœuds réseaux (8 ; 9) de deux réseaux locaux différents (1₁ ; 1₂) mais pas les nœuds de passage (2₁ ; 2₂) aux extrémités de la liaison (10) entre les deux réseaux locaux (1₁ ; 1₂), **caractérisé**
a) **en ce que** le nœud réseau (8 ; 9), générant la clé utile à sécurité quantique et la déposant dans une mémoire de clés locale, d'un premier des deux réseaux locaux (1₁ ; 1₂) transmet cette clé utile au nœud de passage (2₁ ; 2₂) de ce premier réseau local (1₁ ; 1₂) par le biais d'une liaison point par point dans une fonction XOR bit par bit avec une clé quantique servant, en raison de l'échange selon un procédé QKD, comme clé commune pour le nœud réseau et pour le nœud de passage (2₁ ; 2₂) du premier réseau local (1₁ ; 1₂) et
b) **en ce que** le nœud de passage (2₁ ; 2₂) du premier réseau local (1₁ ; 1₂) recevant la fonction XOR construite conformément à a) avec les clés utiles opère cette fonction tant de nouveau avec la clé quantique commune utilisée par le nœud réseau (8 ; 9) générant la clé utile afin de construire la fonction qu'avec, en outre, une clé quantique, qu'il extrait de la réserve de clés commune avec le nœud de passage (2₁ ; 2₂) de l'autre, deuxième réseau local (1₁ ; 1₂) et transmet la séquence de bits résultante au nœud de passage (2₁ ; 2₂) du deuxième réseau local (1₁ ; 1₂) et
c) **en ce que** le nœud de passage (2₁ ; 2₂) du deuxième réseau local (1₁ ; 1₂) recevant la séquence de bits envoyées par le nœud de passage (2₁ ; 2₂) du premier réseau local (1₁ ; 1₂) opère de nouveau sur cette séquence de bits une fonction XOR bit par bit avec la clé quantique utilisée selon b) provenant de la réserve de clés commune aux deux nœuds de passage (2₁ ; 2₂) ainsi qu'avec une clé quantique servant comme clé commune, en raison de l'échange selon un procédé QKD, pour ce nœud de passage (2₁ ; 2₂) du deuxième réseau local (1₁ ; 1₂) et pour le nœud réseau (8 ; 9) du deuxième réseau local (1₁ ; 1₂) déterminé pour recevoir la clé utile et transmet la séquence de bits résultante par le biais d'une liaison point par point au nœud réseau (8 ; 9) au sein de ce même réseau local (1₁ ; 1₂) déterminé pour recevoir la clé utile et
d) **en ce que** le nœud réseau (8 ; 9) déterminé pour recevoir la clé utile extrait celle-ci de la séquence de bits qui lui est transmise selon c) et la dépose dans une mémoire de clés locale (5₁ ; 5₂), dans lequel ce nœud réseau (8 ; 9) extrait la clé utile de la séquence de bits qu'il a reçue, le nœud réseau opérant à nouveau une fonction XOR bit par bit sur cette séquence de bits avec la clé quantique utilisée selon c) et servant comme clé commune, en raison du procédé QKD, pour ce réseau et pour le nœud de passage (2₁ ; 2₂) du même réseau local (1₁ ; 1₂) -

8. Nœud de passage (2₁ ; 2₂), à savoir nœud réseau dans un réseau local (1₁ ; 1₂), lequel se trouve dans une liaison respective pour l'échange de clés à sécurité quantique avec d'autres nœuds réseau de ce même réseau local (1₁ ; 1₂) et est disposé à l'extrémité d'une liaison de ce réseau local (1₁ ; 1₂) avec un autre réseau local (1₁ ; 1₂), dans lequel le nœud de passage (2₁ ; 2₂) comprend
- au moins une unité fonctionnelle (3₁; 3₂) destinée à générer des clés quantiques et à l'échange de clés quantiques selon un procédé QKD,
- au moins une unité fonctionnelle (4₁; 4₂) destinée à la gestion locale des clés et au moins une mémoire de clés locale (5₁ ; 5₂),
- au moins une unité fonctionnelle (6₁ ; 6₂) destinée à créer une liaison avec un nœud de passage (2₁ ; 2₂) de l'autre réseau local (1₁ ; 1₂) pour la transmission chiffrée d'une clé utile, à savoir une clé à sécurité quantique destinée à une utilisation ultérieure pour un échange de données sécurisé et générée sur une des couches du modèle de couches OSI d'un nœud réseau (2₁ ; 2₂ ; 8 ; 9) configuré à cet effet d'un des réseaux locaux (1₁ ; 1₂), **caractérisé en ce que** le nœud de passage (2₁ ; 2₂) comporte un module de sécurité matériel (HSM) doté d'au moins un serveur PQC (7₁ ; 7₂), à savoir une unité renforcée par une technique matérielle, laquelle est également configurée pour opérer une fonction XOR bit par bit sur des séquences de bits, à savoir une séquence de bits accueillant la clé utile générée dans un des réseaux locaux (1₁; 1₂) et transmise avec un chiffrage symétrique entre les nœuds de passage (2₁; 2₂) des réseaux locaux (1₁ ; 1₂) avec la séquence de bits d'une clé quantique tirée de la mémoire de clés (5₁ ; 5₂) avec la réserve de clés locale du nœud de passage (2₁ ; 2₂) sous le pilotage de la gestion locale de clés (4₁ ; 4₂) du nœud de passage (2₁ ; 2₂), cette dernière clé étant générée avant le transfert de la clé utile dans un des nœuds de passage (2₁; 2₂), échangée de manière chiffrée entre les nœuds de passage (2₁ ; 2₂) au moyen de l'au moins un serveur PQC (7₁ ; 7₂) du HSM en utilisant un procédé PQC (cryptographie post-quantique), ainsi que d'une clé quantique préalablement échangée entre les nœuds de passage (2₁; 2₂) en tant que shared secret et déposée localement dans les nœuds de passage (2₁ ; 2₂).

9. Nœud de passage (2₁ ; 2₂) selon la revendication 8, **caractérisé en ce que** celui-ci est configuré comme partie d'un réseau métropolitain.
